# EUROPEAN PATENT SPECIFICATION

(11) **EP 2 353 259 B1**
(45) Date of publication and mention of the grant of the patent: **13.11.2013**
(21) Application number: 09785690.0
(22) Date of filing: 24.09.2009
(51) Int. Cl.: H04L 12/58

(54) **MESSAGE PROCESSING**
NACHRICHTENVERARBEITUNG
TRAITEMENT DE MESSAGE

(30) Priority: 24.09.2008 US 99733 P
(43) Date of publication of application: 10.08.2011
(73) Proprietor: Bloxx Limited, Livingston EH54 7EG (GB)
(72) Inventor: MURPHY, John Paul, West Lothian Edinburgh (GB)
(74) Representative: Hayden, Nicholas Mark
(86) International application number: PCT/GB2009/051248
(87) International publication number: WO 2010/035037

(56) References cited:
- EP-A- 1 603 066
- WO-A-2004/099905
- US-A1- 2003 195 937
- US-A1- 2006 031 373
- MOSES GARUBA ET AL: "Comparative Analysis of Email Filtering Technologies" INFORMATION TECHNOLOGY, 2007. ITNG '07. FOURTH INTERNATIONAL CONF ERENCE ON, IEEE, PI, 1 April 2007 (2007-04-01), pages 785-789, XP031076142 ISBN: 978-0-7695-2776-5

## Description

This invention relates to message processing, in particular receiving messages and forwarding them to recipients.

In the field of message processing, email filtering systems are used by organisations for the detection and elimination of threats. These threats include spam, phishing and malware. Once these threats have been removed from an inbound email stream then the email messages that remain are considered "good", that is free from malicious intent, and are forwarded on for delivery to recipient users.

However, this "good" email, whilst already filtered of content deemed malicious or damaging, may be directed towards individuals for their own personal use and not for purposes reconcilable with the business of the organisation for which they work. The time spent reading, analysing and responding to such email detracts from the amount of time available to perform tasks that contribute to the delivery of the goods or services that the organisation exists to provide, and so may be considered a problem that ranks alongside the more traditional email-bome threats listed above.

US patent publication number 2003/0195937 discloses electronic messages being processed based on criteria relating to the sender, the content, and the personalization of the message. The content of the messages, the recipient's address book, and parameters such as desired keywords and undesired keywords are employed in determining a numeric ranking for each message. Based upon the ranking, messages are assigned to a category indicating an expected response of the recipient, such as read, reply, and save, or simply read.

According to a first aspect of the present invention there is provided a message processing system comprising:
a message receiver component that receives a message;
an identifying component that determines a user identity from the message;
a content categoriser component that determines a content category of the message; and
a message delivery action component that takes a delivery action based on the determined user identity and the determined content category
characterised in that the content categoriser component examines a web page associated with a domain included in the message to determine the content category of the message.

Preferably, the message delivery action component uses a policy that associates the user identity with a delivery rule applicable to a predetermined content category, to take the delivery action.

Preferably, the domain comprises a domain of the sending address of the message.

Preferably, the domain comprises a domain embedded in a body of the message.

Preferably, the content categoriser component uses a domain database comprising records of domains with associated predetermined content categories to determine the content category of the message in combination with examining the web page associated with the domain included in the message.

Preferably, the content categoriser component examines the content of the message if the domain is not found in the domain database.

Preferably, the content categoriser component examines content of the message to determine the content category of the message in combination with examining the web page associated with the domain included in the message.

According to a second aspect of the present invention there is provided a method of processing a message, the method comprising the steps:
receiving the message;
determining a user identity from the message;
determining a content category of the message; and taking a delivery action based on the determined user identity and
the determined content category
characterised in that the step of determining a content category comprises the step of using a domain included in the message to determine the content category of the message by examining a web page associated with the domain included in the message.

Preferably, the delivery action comprises using a policy that associates the user identity with a delivery rule applicable to a predetermined content category, to take the delivery action.

Preferably, the domain comprises a domain of the sending address of the message.

Preferably, the domain comprises a domain embedded in a body of the message.

Preferably, the step of determining a content category comprises the step of using a domain database comprising records of domains with associated predetermined content categories in combination with examining the web page associated with the domain included in the message.

Preferably, the step of determining a content category comprises the step of examining the content of the message if the domain is not found in the domain database.

Preferably, the step of determining a content category comprises the step of examining the content of the message in combination with examining the web page associated with the domain included in the message.

According to a third aspect of the present invention there is provided a computer readable medium having a computer program stored thereon, which when executed by a computer performs the method of the second aspect.

The present invention will now be described by way of example only with reference to the accompanying figures in which;
Figure 1 illustrates, in schematic form email processing including the system in accordance with the present invention;
Figure 2 illustrates in schematic form prior art email processing;
Figure 3 illustrates in schematic form a preferred embodiment of the present invention;
Figure 4 illustrates a flow chart of an embodiment of a method of incoming message processing according to the present invention; and
Figure 5 illustrates a flow chart of an embodiment of a method of outgoing message processing according to the present invention.

The preferred embodiment of the present invention is an email processing system that may be used, along with conventional email filtering to remove malicious email, that functions to process incoming email messages appropriately. Although embodiments of the invention described below relate to email processing the invention is applicable to other forms of messages, for example; instant messages, voice messages, text messages etc.

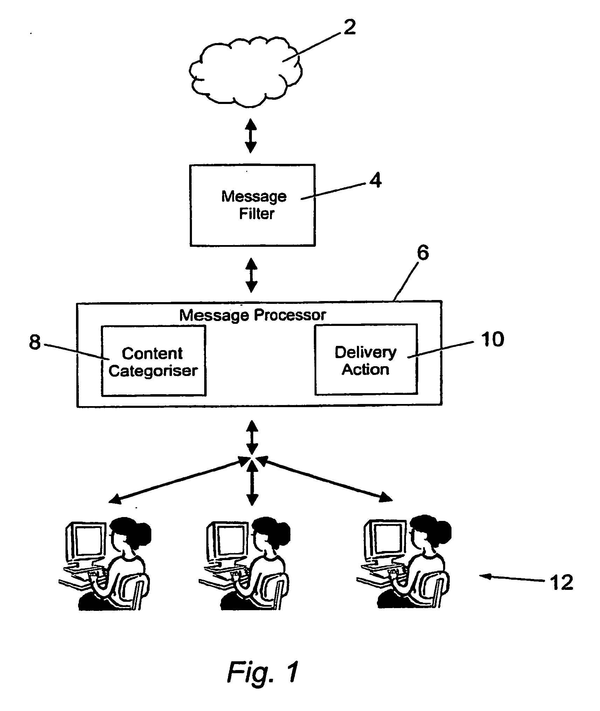

With reference to figure 1, messages originating with a message sender travel through the internet 2 to the message filter 4 within an organisation. The message filter could be a stand-alone server running message filtering software, for example email filtering software. Alternatively, the message filter could be a software process running on a server or a distributed group of computers.

The message processor 6 comprises a content categorising component 8 and a delivery action component 10. The preferred embodiment of the present invention is to provide the message processor 6 as a stand alone server appliance which accepts a stream of email messages as at input and outputs a stream of process messages. However, as with the message filter 4, the system and method of the present invention could be implemented in a variety of ways across different computer systems or even integrated into the same computer systems as the message filter 4.

The messages are distributed to the recipient users 12.

Because the volume of malicious email generated on the internet shows no sign of decreasing, when considering where to add the extra layer of email processing provided by the present invention, it is preferable to place the additional processing of the present invention after the malicious content has already been removed by the message filter 4. This reduces the load placed on the message processing system of the present invention.

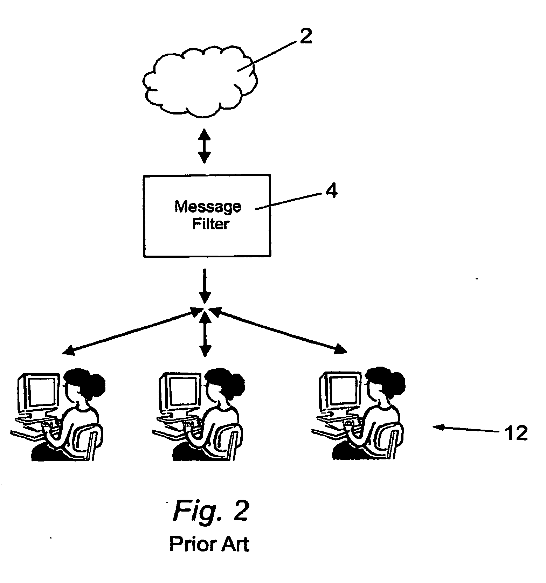

With reference to figure 2 a prior art message filter is shown with the numbering labelled as in figure 1. The system as shown in figure 2 has the disadvantage that messages are delivered immediately to the users, or their mail boxes, as soon as they have been processed by the message filter 4.

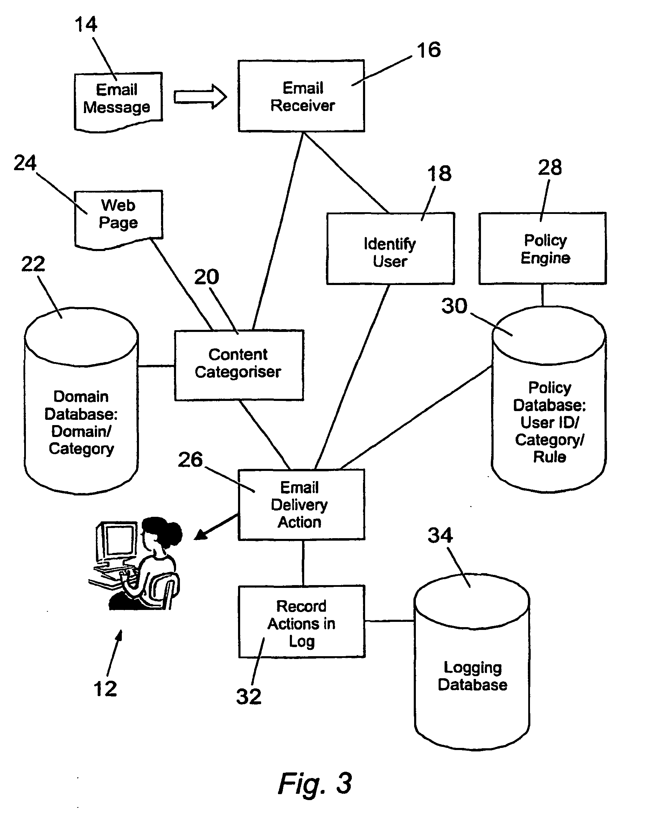

With reference to figure 3, an email message 14 is received by the email receiver 16. As mentioned above, the email message 14 will generally have been filtered by a conventional email filter. The system has a recipient identifier 18 that determines a recipient user identity from the received email message. The recipient would typically be identified from an email by reading the email header and extracting the destination email address. Although a recipient user identity is being used to refer to an email address, the recipient user identity might be a mailbox, distribution group, alias or another form of identifier of a destination.

In parallel or in sequence with the identifying of the recipient, the content categoriser 20 determines a content category of the email message. The content categoriser may use the domain of the sending address of the email message obtained from the email receiver 16 or by examining the email header itself. The content categoriser 20 may use other domains embedded in the header, for example the reply-to address, or a domain embedded in the message body in the form of a web address or email address to determine the content category of the database. A convenient way to use the domain to determine the content category is for the content categoriser to use a domain database 22 that comprises records of domains with associated predetermined content categories. This is a database of known domains from which email originates. Each domain can be associated with zero, one or more content categories that characterise that type of content the typically originates from the respected domain. These content categories define the types of email content that the end user may receive. Thus the content categories in the database model the primary purpose of the origination domain. Some example domains and their associated categories are listed below.
Ebay.com - auction
Autotrader.co.uk - automotive
Gmail.com - webmail
Monster.com - recruitment
Glasgow.ac.uk - education
Wikipedia.org - reference
Bbc.co.uk - arts and entertainment
Willhill.co.uk -gambling
Celticfc.net - sports
Bible.com - religion

By examining the domain of the sending email address, or other email addresses or other fields containing domains (e.g. a web page url) within the headers or body of the message, then consulting the database 22 of known domains and their associated categories, the content categoriser may determine content category of the email message. If the email address originates from a domain unknown to the database, that is if the domain of the sending address of the email address is not found in the database, then an attempt may be made to surmise the category from the title and body text contained within the email message. In this way the content categoriser examines the content of the email message to determine the content category of the email message.

If insufficient information is available in the email itself, then the main web page 24 associated with the domain (or one or more other pages) can be examined by the content categoriser or another component to determine the content category of the email message. Although in the example above the content category is determined starting with domain look up then looking at the email message itself and finally the web page, it would also be possible to use all three of those methods of determining the content category in a different order or combination, or altogether. Other methods of determining content category can be envisaged including, but not limited to, analysis of the time of day that the email message is received, frequency of which similar emails are received, etc.

The email delivery action component 26 takes a delivery action based on the determined recipient user identity and the determined content category. In this embodiment of the present invention the policy engine 28 is used for the configuration and storage in a policy database 30 of email processing policy. The policy engine contains information such as: aggregation of users into groups; the delivery actions applicable for different categories across the defined users in groups; and the times of day of which different delivery actions are applicable. In this way the email delivery action component uses policies that associate the recipient user identity with delivery rules applicable to predetermined content categories, in order to take the delivery action. The delivery rules may comprise predetermined delivery times, predetermined delivery time windows, periods of working and non-working time, predetermined email forwarding addresses to which messages should be send or other rules. Thus the surmised content category is used to retrieve a delivery action rule from the email policy previously defined for the recipient user in question. The delivery actions include but are not limited to
1. Deliver: forward the email to the user.
2. Block: withhold the email permanently.
3. Hold: withhold the email temporarily until the time deemed suitable by the email policy defined for that user and then forward the email to the user.
4. Divert: forward the email to another email address, defined within the policy. This action may be combined with any of the 3 previously defined actions.
5. Truncate: remove attachments before forwarding.

In particular the hold delivery action, which provides the temporary withholding of an email from delivery until deemed suitable, allows an organisation to ensure that, except for explicitly defined intervals, its staff will only receive emails that are applicable to the delivery of the goals of the business. Those emails which are deemed to be unproductive can be delivered at times which are set aside for users' own purposes such as meal breaks or pre/post work periods.

Optionally, the system has a delivery action recorder component 32 that writes entries to a logging database 34 that stores a time stamp, all the relevant information stored in the emails' headers, the delivery action taken and the reason why that action was taken. The entire body of each email may be stored in the logging database.

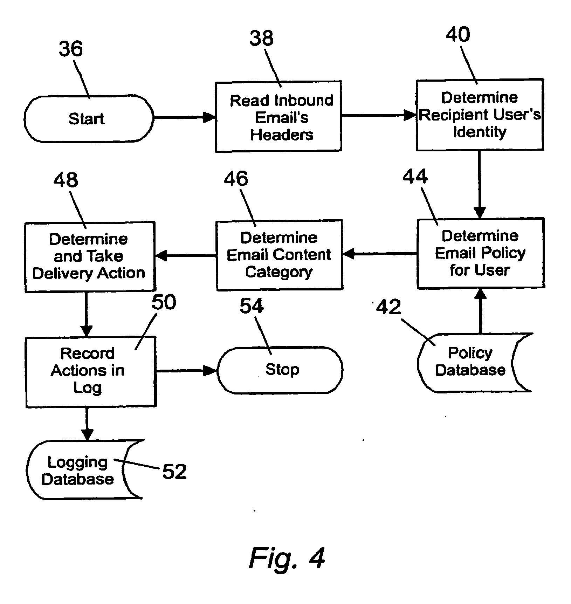

With reference to figure 4 the process used for an individual email may be as follows. At the start 36 an inbound email address's headers are read 38. This step extracts the information such as the sender and destination email addresses, the email subject and the time that the email was sent.

The recipient user's identity or identifier is determined 40. Email policy may be tailorable for different users. Determining the recipient's identity based on the destination email address is used to determine the policy actions to be applied to each email. Once a user's identity has been determined, then the policy database 42 is consulted in order to obtain the policy that applies to the identified recipient user 44.

Next the email content category is determined 46. This is done as described in relation to figure 3 above. Next the delivery action is determined and taken 48 also as described above. Finally, the actions taken are recorded 50 in a logging database 52 at which point the processing of the email is complete 54. The email is then treated by the conventional email distribution systems and would typically end up in the inbox of the recipient user.

Messaging, such as email, is often a conversation. Processing incoming message according to the present invention deals with one side of the conversation, where the determined user identity is a recipient of the message. The productivity benefits are applicable in the outbound direction as for inbound email.

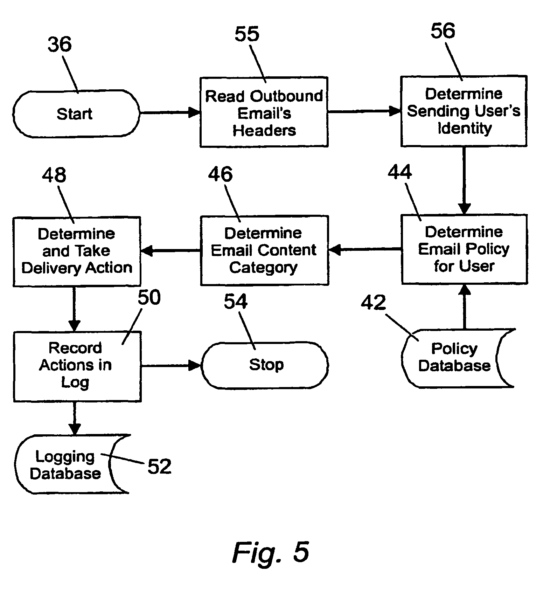

With reference to Figure 5, the present invention may also be used to deal with the other side of the conversation, by processing outgoing messages, where the determined user identity is a sender of the message. The steps in Figure 5 are the same as in figure 4, except an outbound email address's headers are read 55. This step again extracts the information such as the sender and destination email addresses, the email subject and the time that the email was sent. The sending user's identity or identifier is then determined 56, then the policy database 42 is consulted in order to obtain the policy that applies to the identified sending user 44.

Further modifications and improvements may be added without departing from the scope of the invention described by the claims herein.

## Claims

1. A message processing system comprising:
a message receiver component (16) adapted to receive a message (14);
an identifying component (18) adapted to determine a user identity from the message;
a content categoriser component (20) adapted to determine a content category of the message; and
a message delivery action component (26) adapted to take a delivery action based on the determined user identity and the determined content category
**characterised in that** the content categoriser component is adapted to examine a web page (24) associated with a domain included in the message to determine
the content category of the message.

2. The message processing system of claim 1, wherein the message delivery action component (26) is adapted to use a policy that associates the user identity with a delivery rule applicable to a predetermined content category, to take the delivery action.

3. The message processing system of claim 1 or claim 2, wherein the domain comprises a domain of the sending address of the message.

4. The message processing system of claim 1 or claim 2, wherein the domain comprises a domain embedded in a body of the message.

5. The message processing system of any previous claim, wherein the content categoriser component (20) is adapted to use a domain database (22) comprising records of domains with associated predetermined content categories to determine the content category of the message in combination with examining the web page associated with the domain included in the message.

6. The message processing system of claim 5, wherein the content categoriser (20) component is adapted to examine the content of the message if the domain is not found in the domain database.

7. The message processing system of any previous claim, wherein the content categoriser component (20) is adapted to examine content of the message (14) to determine the content category of the message in combination with examining the web page associated with the domain included in the message.

8. A method of processing a message, the method comprising the steps:
receiving the message;
determining a user identity from the message(40);
determining a content category of the message (46); and taking a delivery action (48) based on the determined user identity and the determined content category
**characterised in that** the step of determining a content category (46) comprises the step of using a domain included in the message to determine the content category of the message by examining a web page associated with the domain included in the message.

9. The method of claim 8, wherein the delivery action (48) comprises using a policy (42) that associates the user identity with a delivery rule applicable to a predetermined content category, to take the delivery action.

10. The method of claim 8 or claim 9, wherein the domain comprises a domain of the sending address of the message.

11. The method of any of claims 8 to 10, wherein the domain comprises a domain embedded in a body of the message.

12. The method of any of claims 8 to 11, wherein the step of determining a content category (46) comprises the step of using a domain database comprising records of domains with associated predetermined content categories in combination with examining the web page associated with the domain included in the message.

13. The method of claim 12, wherein the step of determining a content category comprises the step of examining the content of the message if the domain is not found in the domain database.

14. The method of any of claims 8 to 13, wherein the step of determining a content category comprises the step of examining the content of the message in combination with examining the web page associated with the domain included in the message.

15. A computer readable medium having a computer program stored thereon, which when executed by a computer performs the method of any of claims 8 to 14.

## Patentansprüche

1. Ein Nachrichtenverarbeitungssystem, das Folgendes beinhaltet:
eine Nachrichtenempfängerkomponente (16), die angepasst ist, um eine Nachricht (14) zu empfangen;
eine Identifizierungskomponente (18), die angepasst ist, um aus der Nachricht eine Benutzeridentität zu bestimmen;
eine Inhaltskategorisiererkomponente (20), die angepasst ist, um eine Inhaltskategorie der Nachricht zu bestimmen; und
eine Nachrichtenlieferungshandlungskomponente (26), die angepasst ist, um auf der Basis der bestimmten Benutzeridentität und der bestimmten Inhaltskategorie eine Lieferungshandlung vorzunehmen,
**dadurch gekennzeichnet, dass** die Inhaltskategorisiererkomponente angepasst ist, um eine Internetseite (24), die mit einer in der Nachricht eingeschlossenen Domäne assoziiert ist, zu überprüfen, um die Inhaltskategorie der Nachricht zu bestimmen.

2. Nachrichtenverarbeitungssystem gemäß Anspruch 1, wobei die Nachrichtenlieferungshandlungskomponente (26) angepasst ist, um eine Vorgehensweise zu verwenden, die die Benutzeridentität mit einer Lieferungsregel assoziiert, die auf eine vorgegebene Inhaltskategorie anzuwenden ist, um die Lieferungshandlung vorzunehmen.

3. Nachrichtenverarbeitungssystem gemäß Anspruch 1 oder Anspruch 2, wobei die Domäne eine Domäne der Sendeadresse der Nachricht beinhaltet.

4. Nachrichtenverarbeitungssystem gemäß Anspruch 1 oder Anspruch 2, wobei die Domäne eine in einem Körper der Nachricht eingebettete Domäne beinhaltet.

5. Nachrichtenverarbeitungssystem gemäß einem der vorhergehenden Ansprüche, wobei die Inhaltskategorisiererkomponente (20) angepasst ist, um eine Domänendatenbank (22) zu verwenden, die Aufzeichnungen von Domänen mit assoziierten vorgegebenen Inhaltskategorien beinhaltet, um die Inhaltskategorie der Nachricht in Kombination mit dem Überprüfen der Internetseite, die mit der in der Nachricht eingeschlossenen Domäne assoziiert ist, zu bestimmen.

6. Nachrichtenverarbeitungssystem gemäß Anspruch 5, wobei die Inhaltskategorisiererkomponente (20) angepasst ist, um den Inhalt der Nachricht zu überprüfen, wenn die Domäne nicht in der Domänendatenbank gefunden wird.

7. Nachrichtenverarbeitungssystem gemäß einem der vorhergehenden Ansprüche, wobei die Inhaltskategorisiererkomponente (20) angepasst ist, um Inhalt der Nachricht (14) zu überprüfen, um die Inhaltskategorie der Nachricht in Kombination mit dem Überprüfen der Internetseite, die mit der in der Nachricht eingeschlossenen Domäne assoziiert ist, zu bestimmen.

8. Ein Verfahren zum Verarbeiten einer Nachricht, wobei das Verfahren die folgenden Schritte beinhaltet:
Empfangen der Nachricht;
Bestimmen einer Benutzeridentität aus der Nachricht (40);
Bestimmen einer Inhaltskategorie der Nachricht (46); und
Vornehmen einer Lieferungshandlung (48) auf der Basis der bestimmten Benutzeridentität und der bestimmten Inhaltskategorie,
**dadurch gekennzeichnet, dass** der Schritt des Bestimmens einer Inhaltskategorie (46) den Schritt des Verwendens einer in der Nachricht eingeschlossenen Domäne beinhaltet, um die Inhaltskategorie der Nachricht durch Überprüfen einer Internetseite, die mit der in der Nachricht eingeschlossenen Domäne assoziiert ist, zu bestimmen.

9. Verfahren gemäß Anspruch 8, wobei die Lieferungshandlung (48) das Verwenden einer Vorgehensweise (42) beinhaltet, die die Benutzeridentität mit einer Lieferungsregel assoziiert, welche auf eine vorgegebene Inhaltskategorie anzuwenden ist, um die Lieferungshandlung vorzunehmen.

10. Verfahren gemäß Anspruch 8 oder Anspruch 9, wobei die Domäne eine Domäne der Sendeadresse der Nachricht beinhaltet.

11. Verfahren gemäß einem der Ansprüche 8 bis 10, wobei die Domäne eine in einem Körper der Nachricht eingebettete Domäne beinhaltet.

12. Verfahren gemäß einem der Ansprüche 8 bis 11, wobei der Schritt des Bestimmens einer Inhaltskategorie (46) den Schritt des Verwendens einer Domänendatenbank beinhaltet, die Aufzeichnungen von Domänen mit assoziierten vorgegebenen Inhaltskategorien beinhaltet, in Kombination mit dem Überprüfen der Internetseite, die mit der in der Nachricht eingeschlossenen Domäne assoziiert ist.

13. Verfahren gemäß Anspruch 12, wobei der Schritt des Bestimmens einer Inhaltskategorie den Schritt des Überprüfens des Inhalts der Nachricht beinhaltet, wenn die Domäne nicht in der Domänendatenbank gefunden wird.

14. Verfahren gemäß einem der Ansprüche 8 bis 13, wobei der Schritt des Bestimmens einer Inhaltskategorie den Schritt des Überprüfens des Inhalts der Nachricht in Kombination mit dem Überprüfen der Internetseite, die mit der in der Nachricht eingeschlossenen Domäne assoziiert ist, beinhaltet.

15. Ein maschinenlesbares Medium, auf dem ein Computerprogramm gespeichert ist, das, wenn von einem Computer ausgeführt, das Verfahren gemäß einem der Ansprüche 8 bis 14 durchführt.

## Revendications

1. Un système de traitement de message comprenant :
un composant récepteur de message (16) conçu pour recevoir un message (14) ;
un composant d'identification (18) conçu pour déterminer l'identité d'un utilisateur à partir du message ;
un composant catégoriseur de contenu (20) conçu pour déterminer une catégorie de contenu du message ; et
un composant d'action de délivrance de message (26) conçu pour réaliser une action de délivrance sur la base de l'identité de l'utilisateur déterminée et de la catégorie de contenu déterminée
**caractérisé en ce que** le composant catégoriseur de contenu est conçu pour examiner une page web (24) associée à un domaine inclus dans le message afin de déterminer la catégorie de contenu du message.

2. Le système de traitement de message de la revendication 1, dans lequel le composant d'action de délivrance de message (26) est conçu pour utiliser une politique qui associe l'identité de l'utilisateur à une règle de délivrance applicable à une catégorie de contenu prédéterminée, pour réaliser l'action de délivrance.

3. Le système de traitement de message de la revendication 1 ou de la revendication 2, dans lequel le domaine comprend un domaine de l'adresse d'envoi du message.

4. Le système de traitement de message de la revendication 1 ou de la revendication 2, dans lequel le domaine comprend un domaine incorporé dans un corps du message.

5. Le système de traitement de message de n'importe quelle revendication précédente, dans lequel le composant catégoriseur de contenu (20) est conçu pour utiliser une base de données de domaines (22) comprenant des enregistrements de domaines avec des catégories de contenu prédéterminées associées afin de déterminer la catégorie de contenu du message en combinaison avec l'examen de la page web associée au domaine inclus dans le message.

6. Le système de traitement de message de la revendication 5, dans lequel le composant catégoriseur de contenu (20) est conçu pour examiner le contenu du message si le domaine n'est pas trouvé dans la base de données de domaines.

7. Le système de traitement de message de n'importe quelle revendication précédente, dans lequel le composant catégoriseur de contenu (20) est conçu pour examiner le contenu du message (14) afin de déterminer la catégorie de contenu du message en combinaison avec l'examen de la page web associée au domaine inclus dans le message.

8. Une méthode de traitement d'un message, la méthode comprenant les étapes consistant à :
recevoir le message ;
déterminer l'identité d'un utilisateur à partir du message (40) ;
déterminer une catégorie de contenu du message (46) ; et
réaliser une action de délivrance (48) sur la base de l'identité de l'utilisateur déterminée et de la catégorie de contenu déterminée
**caractérisée en ce que** l'étape consistant à déterminer une catégorie de contenu (46) comprend l'étape consistant à utiliser un domaine inclus dans le message afin de déterminer la catégorie de contenu du message en examinant une page web associée au domaine inclus dans le message.

9. La méthode de la revendication 8, dans laquelle l'action de délivrance (48) comprend le fait d'utiliser une politique (42) qui associe l'identité de l'utilisateur à une règle de délivrance applicable à une catégorie de contenu prédéterminée, pour réaliser l'action de délivrance.

10. La méthode de la revendication 8 ou de la revendication 9, dans laquelle le domaine comprend un domaine de l'adresse d'envoi du message.

11. La méthode de n'importe lesquelles des revendications 8 à 10, dans laquelle le domaine comprend un domaine incorporé dans un corps du message.

12. La méthode de n'importe lesquelles des revendications 8 à 11, dans laquelle l'étape consistant à déterminer une catégorie de contenu (46) comprend l'étape consistant à utiliser une base de données de domaines comprenant des enregistrements de domaines avec des catégories de contenu prédéterminées associées en combinaison avec l'examen de la page web associée au domaine inclus dans le message.

13. La méthode de la revendication 12, dans laquelle l'étape consistant à déterminer une catégorie de contenu comprend l'étape consistant à examiner le contenu du message si le domaine n'est pas trouvé dans la base de données de domaines.

14. La méthode de n'importe lesquelles des revendications 8 à 13, dans laquelle l'étape consistant à déterminer une catégorie de contenu comprend l'étape consistant à examiner le contenu du message en combinaison avec l'examen de la page web associée au domaine inclus dans le message.

15. Un support lisible par un ordinateur sur lequel est stocké un programme informatique qui met en oeuvre, lorsqu'il est exécuté par un ordinateur, la méthode de n'importe lesquelles des revendications 8 à 14.
